(19) Europäisches Patentamt
European Patent Office
Office européen des brevets

(11) Publication number: 0 261 069 A2

# (12) EUROPEAN PATENT APPLICATION

(21) Application number: 87630189.6

(22) Date of filing: 15.09.87

(51) Int. Cl.⁴: C 08 F 297/02

(30) Priority: 17.09.86 US 908491

(43) Date of publication of application: 23.03.88 Bulletin 88/12

(84) Designated Contracting States: DE ES FR GB IT NL

(71) Applicant: THE GOODYEAR TIRE & RUBBER COMPANY
1144 East Market Street
Akron, Ohio 44316-0001 (US)

(72) Inventor: Cunningham, Robert Elwin
342 Kenilworth Drive
Akron Ohio 44313 (US)

(74) Representative: Weyland, Joseph Jean Pierre
Goodyear International Tire Technical Center Patent
Department Avenue Gordon Smith
L-7750 Colmar-Berg (LU)

## (54) Triblock polymer and synthesis technique.

(57) It has been determined that certain triblock polymers containing isopropenylnaphthalene and/or vinylnaphthalene have outstanding properties as thermoplastic elastomers. For instance, these polymers have improved strength at elevated temperatures. These thermoplastic elastomers are comprised of (1) an end block which is comprised of vinylnaphthalene and/or isopropenylnaphthalene; (2) a middle block which is comprised of a polymer of at least one conjugated diolefin; and (3) a second end block which is comprised of a polymer of at least one member selected from the group consisting of vinylnaphthalene, styrene, and ring substituted alkyl styrenes. These polymers can be prepared utilizing moderate polymerization temperatures on a commercial basis. Such a process for synthesizing an isopropenylnaphthalene containing triblock polymer comprises (1) polymerizing isopropenylnaphthalene in the presence of an organolithium catalyst at a temperature within the range of -40°C to 40°C to produce a lithium terminated block; (2) allowing the lithium terminated block to react with a conjugated diolefin monomer at a temperature within the range of 20°C to 100°C to produce a lithium terminated diblock polymer; and (3) allowing the lithium terminated diblock polymer to react with at least one member selected from the group consisting of vinylnaphthalene, styrene, and ring substituted alkyl styrenes at a temperature within the range of 20°C to 100°C to produce an isopropenylnaphthalene containing triblock polymer.

EP 0 261 069 A2

**Description**

TRIBLOCK POLYMER AND SYNTHESIS TECHNIQUE

Background of the Invention

Thermoplastic elastomers are very useful because they provide the properties of rubbers and the processability of thermoplastics. They can be processed directly into finished articles by conventional thermoplastic techniques, such as injection molding or extrusion. In general, they provide the desirable physical characteristics of thermoset rubber in terms of flexibility, elastic recovery, resilience, traction and the like. It is these rubber-like properties that distinguish thermoplastic elastomers from traditional flexible thermoplastic materials.

Thermoplastic elastomers offer a significant advantage in processing economics over typical rubbers which are cured with sulfur. This is because the processing of thermoplastic elastomers is much less energy intensive than is curing typical rubbers. This, coupled with the fact that scrap can be reprocessed, allows for much more efficient plant and equipment utilization.

The characteristics of thermoplastic elastomers are dependent on the types of polymers used as well as the manner in which they are combined. Commercially available thermoplastic elastomers vary widely in chemical composition and structure. However, thermoplastic elastomers are often block copolymers. Such block copolymers are made up of blocks or segments of a thermoplastic and an elastomer.

The thermoplastic segment in such block copolymers can be glassy or crystalline. For instance, polystyrene, which is glassy, is very commonly used, although crystallizable polyester also can be utilized. The softer segment is commonly comprised of repeat units which are derived from a conjugated diolefin monomer, such as butadiene or isoprene. The hard thermoplastic segment and the soft rubbery segments in such block copolymers are incompatible. Accordingly, domains or regions of the soft material and the hard material are formed. The morphological structure formed consists of domains of hard blocks which are connected to the flexible elastomeric segments. The thermoplastic domains, in effect, crosslink the rubbery segments resulting in a reinforced network structure which behaves similarly to a chemically crosslinked system. In contrast to a chemically crosslinked rubber, the network polymer structure formed in articles made of thermoplastic elastomers is reversible. In other words, as the thermoplastic elastomer is heated above the glass transition temperature of the thermoplastic segments, the hard blocks soften to plasticize the rubber segments (soft segments) so that the thermoplastic elastomer can be processed like a conventional thermoplastic. A network structure is reestablished when the thermoplastic elastomer is cooled below the glass transition temperature of the thermoplastic segments therein.

Diblock polymers and triblock polymers which are comprised of blocks which are derived from 2-isopropenylnapthalene and 1,3-butadiene are disclosed in United States Patent 4,360,639. These polymers are reported to display rubber-elastic characteristics with improved high-temperature stability. These polymers are prepared in inert aliphatic or cycloaliphatic hydrocarbon solvents utilizing organolithium catalysts at very low temperatures which are between 0° C and -80° C. In the process described it is preferred to utilize temperatures between -50° C and -80° C.

The synthesis technique described in U.S. Patent 4,360,639 is difficult to carry out on a commercial basis because of the low temperatures which are required. Such a low temperature polymerization naturally requires a great deal of refrigeration capacity and accordingly consumes large amounts of energy for the cooling required. Solutions of "living" isopropenylnaphthalene-butadiene diblock copolymers are very viscous at the low temperatures specified and are exceedingly difficult to handle. Even though polyisopropenylnaphthalene/polybutadiene/polyisopropenylnaphthalene triblock polymers have outstanding characteristics, these problems associated with their synthesis have severely hindered their commercialization.

Summary of the Inventioin

It has been discovered that thermoplastic elastomers which are comprised of (1) an end block which is prepared by polymerizing isopropenylnaphthalene; (2) a middle block which is prepared by polymerizing at least one conjugated diolefin; and (3) a second end block which is prepared by polymerizing vinylnaphthalene, styrene or a ring substituted alkyl styrene; can be prepared at moderate temperatures. Accordingly, such polymers can be produced on a commercial basis without encountering the severe difficulties associated with utilizing low temperature polymerizations. It has also been determined that such triblock polymers act as thermoplastic elastomers and have outstanding high temperature stability. Thus, the polymer synthesis technique described herein overcomes the traditional problems associated with synthesizing similar triblock polymers having high temperature stability.

The subject invention is based upon the discovery that vinylnaphthalene or ring substituted styrenes can be polymerized into such triblock polymers as the second end block at high temperatures which reduce viscosity and promote fast polymerization rates. For instance, vinylnaphthalene, styrene, and ring substituted alkyl styrenes can be polymerized into such triblock polymers as an end block at temperatures in the range of 20° C to 100° C.

The subject invention specifically relates to a process for synthesizing an isopropenylnaphthalene containing triblock polymer having excellent high temperature strength comprising (1) polymerizing

isopropenylnaphthalene in the presence of an organolithium catalyst at a temperature within the range of -40° C to 40° C to produce a lithium terminated block; (2) allowing the lithium terminated block to react with at least one conjugated diolefin monomer at a temperature within the range of 20°C to 100°C to produce a lithium terminated diblock polymer; and (3) allowing the lithium terminated diblock polymer to react with at least one member selected from the group consisting of vinylnaphthalene, styrene, and ring substituted alkyl styrenes at a temperature within the range of 20°C to 100°C to produce the isopropenylnaphthalene containing triblock polymer.

The present invention also discloses a thermoplastic elastomer having excellent high-temperature strength which is a triblock polymer which is comprised of (1) an end block which is prepared by polymerizing isopropenylnaphthalene; (2) a middle block which is prepared by polymerizing at least one conjugated diolefin; and (3) a second end block which is prepared by polymerizing at least one member selected from the group consisting of vinyl naphthalene, styrene, and ring substituted alkyl styrenes. The subject invention further reveals a thermoplastic elastomer having excellent high-temperature stability which is a triblock polymer which is comprised of (1) an end block which is comprised of polyisopropenylnaphthalene; (2) a middle block which is comprised of a polymer of at least one conjugated diolefin; and (3) a second end block which is comprised of a polymer of at least one member selected from the group consisting of vinylnaphthalene, styrene, and ring substituted alkyl styrenes.

The subject invention also relates to a process for synthesizing a vinylnaphthalene containing triblock polymer having excellent high-temperature strength comprising (1) polymerizing vinylnaphthalene in the presence of an organolithium catalyst at a temperature within the range of 20° C to 100° C to produce a lithium terminated block; (2) allowing the lithium terminated block to react with at least one conjugated diolefin monomer at a temperature within the range of 20° C to 100° C to produce a lithium terminated diblock polymer; and (3) allowing the lithium terminated diblock polymer to react with at least one member selected from the group consisting of vinylnaphthalene, styrene, and ring substituted alkyl styrenes at a temperature within the range of 20°C to 100°C to produce the vinylnaphthalene containing triblock polymer. Such a synthesis process can be used in the production of a thermoplastic elastomer having excellent high-temperature strength which is a triblock polymer that is comprised of (1) an end block which is comprised of polyvinylnaphthalene; (2) a middle block which is comprised of a polymer of at least one conjugated diolefin; and (3) a second end block which is comprised of a polymer of at least one member selected from the group consisting of vinylnaphthalene, styrene, and ring substituted alkyl styrenes.

The subject invention also reveals certain tapered block containing diblock polymers which act as thermoplastic elastomers. Accordingly, the subject invention discloses a process for synthesizing a tapered block containing diblock polymer which is a thermoplastic elastomer having excellent high temperature strength which comprises: (1) polymerizing a member selected from the group consisting of isopropenylnaphthalene and vinylnaphthalene in the presence of an organolithium catalyst to produce a lithium terminated block, with the proviso that if isopropenylnaphthalene is being polymerized that a polymerization temperature within the range of -40° C to 40° C is utilized and with the proviso that if vinylnaphthalene is being polymerized that a polymerization temperature within the range of 20°C to 100°C is utilized; and (2) allowing the lithium terminated block to react with at least one conjugated diolefin and at least one member selected from the group consisting of vinylnaphthalene, styrene, and ring substituted alkyl styrenes at a temperature within the range of 20° C to 100° C to produce said tapered block containing diblock polymer. Thus, the subject invention further reveals a thermoplastic elastomer having excellent high-temperature strength which is a diblock polymer which is comprised of (1) an end block which is prepared by polymerizing at least one member selected from the group consisting of isopropenylnaphthalene and vinylnaphthalene, and (2) a tapered block which is prepared by polymerizing at least one conjugated diolefin and at least one member selected from the group consisting of vinylnaphthalene, styrene, and ring substituted alkyl styrenes.

## Detailed Description of the Invention

The diblock and triblock polymers of the present invention can be prepared utilizing conventional polymerization and processing equipment. These diblock and triblock polymers are normally synthesized in a hydrocarbon solvent which can be one or more aromatic, paraffinic, or cycloparaffinic compounds. The solvents used in such solution polymerizations will normally contain from about 4 to about 10 carbon atoms per molecule and will be liquids under the conditions of the polymerization. Some representative examples of suitable organic solvents include pentane, isooctane, cyclohexane, normal-hexane, benzene, toluene, xylene, ethylbenzene, tetrahydrofuran, and the like, alone or in admixture.

The first step utilized in the synthesis of such block polymers involves polymerizing either isopropenylnaphthalene or vinylnaphthalene in the presence of an organolithium catalyst. Either 1-isopropenylnaphthalene or 2-isopropenylnaphthalene can be used with 2-isopropenylnaphthalene being preferred. The vinylnaphthalene can be 1-vinylnaphthalene or 2-vinylnaphthalene with 2-vinylnaphthalene being preferred. The polymerization temperature used depends upon whether isopropenylnaphthalene or vinylnaphthalene is being polymerized. In polymerizations of isopropenylnaphthalene, a polymerization temperature within the range of -40° C to 40° C is utilized. It is generally preferred to utilize a temperature within the range of -5° C to 30° C in polymerizations of isopropenylnaphthalene. It is normally more preferred to utilize a polymerization temperature in the range of 0° C to 20° C in polymerizations of isopropenylnaphthalene. In polymerizations of vinylnaphthalene, the polymerization temperature utilized will normally be within the range of 20° C to 100° C. Such polymerizations of

vinylnaphthalene will preferably be carried out at a polymerization temperature within the range of 40°C to 70°C with polymerization temperatures in the range of 50°C to 65°C being most preferred. In such solution polymerizations which utilize an organic solvent, there will normally be from 5 to 35 weight percent monomers in the polymerization medium. Such polymerization mediums are, of course, comprised of the organic solvent, the monomer (isopropenylnaphthalene or vinylnaphthalene), and an organolithium initiator. In most cases it will be preferred for the polymerization medium to contain from 10 to 30 weight percent monomers. It is generally more preferred for the polymerization medium to contain 20 to 25 weight percent monomers.

The polymerization of isopropenylnaphthalene or vinylnaphthalene in the presence of an organolithium catalyst results in the formation of a lithium terminated polymer. These lithium terminated polymers are utilized as an end block in the diblock and triblock polymers of the present invention. The amount of organolithium initiator utilized is adjusted so that the polymer produced has a number average molecular weight between about 4,000 and about 50,000. These polymeric blocks which are comprised of polyisopropenylnaphthalene or polyvinylnaphthalene generally have a number average molecular weight in the range of about 8,000 to about 30,000. In most cases it is more preferable for such blocks to have a number average molecular weight within the range of 10,000 to 20,000.

The organolithium compounds which are utilized as initiators are normally organo monolithium compounds. The organolithium compounds which are preferred as initiators are monofunctional compounds which can be represented by the formula: R-Li, wherein R represents a hydrocarbyl radical containing from 1 to about 20 carbon atoms. Generally, such monofunctional organolithium compounds will contain from 1 to about 10 carbon atoms. Some representative examples of preferred organolithium compounds include methyllithium, ethyllithium, isopropyllithium, n-butyllithium, sec-butyllithium, n-hexyllithium, n-oxtyllithium, tert-octyllithium, n-decyllithium, phenyllithium, 1-naphthyllithium, 4-butylphenyllithium, p-tolyllithium, 4-phenylbutyllithium, cyclohexyllithium, 4-butylcyclohexyllithium, and 4-cyclohexylbutyllithium. Secondary-butyllithium is a highly preferred organolithium initiator.

The amount of organolithium initiator utilized will vary depending upon the molecular weight which is desired for the polymer being synthesized as well as the precise polymerization temperature which will be utilized. The precise amount of organolithium compound required to produce a polymer of a desired molecular weight can be easily ascertained by persons skilled in the art. However, as a general rule from 0.01 to 1 phm (parts per 100 parts by weight of total monomer) of an organolithium initiator will be utilized. In most cases, from 0.01 to 0.1 phm of an organolithium initiator will be utilized with it being preferred to utilize 0.025 to 0.07 phm of the organolithium initiator.

The lithium-terminated polyisopropenylnaphthalene or lithium-terminated polyvinylnaphthalene made is then further reacted with additional monomers in order to produce the diblock or triblock polymers of the present invention. The diblock polymers of this invention are made by allowing the lithium terminated block (polyisopropenylnaphthalene or polyvinylnaphthalene) to react with a mixture of monomeric components. Such mixtures of monomeric components are comprised of at least one conjugated diolefin monomer and at least one member selected from the group consisting of vinylnaphthalene, styrene, and ring substituted alkyl styrenes. Since conjugated diolefins polymerize preferentially over styrene, ring substituted styrenes, or vinylnaphthalene tapered blocks are produced. This results in the formation of diblock polymers which are comprised of an end block which is comprised of polyvinylnaphthalene or polyisopropenylnaphthalene and a tapered block which is comprised of 1 or more conjugated diolefins and 1 or more members selected from the group consisting of vinylnaphthalene, styrene, and ring substituted alkyl styrenes. The tapered block is rich in repeat units which are derived from the conjugated diolefin monomers utilized at its end which is chemically bonded to the polyvinylnaphthalene block or polyisopropenylnaphthalene block. The other end of the tapered block which is produced is rich in repeat units which are derived from vinylnaphthalene, styrene, and/or ring substituted alkyl styrenes. Such diblock polymers have characteristics which are similar to the characteristics of the triblock polymers of the present invention. This is because the tapered block produced acts chemically in a manner which is similar to two blocks, one of which is derived from conjugated diolefin monomers and one of which is derived from vinylnaphthalene, styrene, and/or ring substituted alkyl styrenes. Such diblock polymers can be visualized as being comprised of (1) an end block which is comprised of polyisopropenylnaphthalene or polyvinylnaphthalene: (2) a middle block which is comprised of repeat units which are derived primarily from conjugated diolefin monomers (lesser amounts of repeat units derived from vinylnaphthalene, styrene, and ring substituted alkyl styrenes are present therein); and (3) a second end block which is comprised of repeat units which are derived primarily from vinylnaphthalene, styrene, and ring substituted alkyl styrenes (lesser amounts of repeat units derived from conjugated diolefins are present therein). The block which is derived primarily from conjugated diolefins acts chemically in a manner which is similar to a block which is comprised of repeat units which are derived exclusively from conjugated diolefin monomers. Similarly, the end of the tapered block acts in a manner which is similar to an end block which is derived exclusively from members selected from the group consisting of vinylnaphthalene, styrene, and ring substituted alkyl styrenes.

The conjugated diolefin monomers which are utilized in the synthesis of the diblock polymers and triblock polymers of the present invention generally contain from 4 to about 12 carbon atoms. Those containing from 4 to 8 carbon atoms are generally preferred for commercial purposes. For similar reasons, 1,3-butadiene and isoprene are the most commonly utilized conjugated diolefin monomers. Some additional conjugated diolefin monomers that can be utilized include 2,3-dimethyl-1,3-butadiene, piperylene, 3-butyl-1,3-octadiene,

2-phenyl-1,3-butadiene, and the like, along or in admixture.

It is generally preferred to utilize 1,3-butadiene as the conjugated diolefin monomer in the synthesis of thermoplastic elastomers which are utilized in making molded articles. This is because the utilization of butadiene generally results in the formation of a polymer which has better stability at high molding temperatures. The diblock polymers and triblock polymers of the subject invention also have useful properties as adhesives. It is normally preferred to utilize isoprene as the conjugated diolefin monomer in making diblock polymers and triblock polymers which are prepared for use in adhesive applications. This is because the utilization of isoprene generally results in the formation of a polymer which has better tack characteristics.

The ring substituted alkyl styrenes which are utilized in making the subject diblock polymers and triblock polymers have the general structural formula:

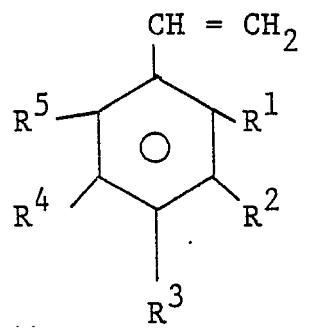

wherein $R^1$, $R^2$, $R^3$, $R^4$, and $R^5$ can be the same or different and represent alkyl radicals containing from 1 to about 10 carbon atoms. Such alkyl groups will normally contain from 1 to about 4 carbon atoms.

The polymerization of the mixture of conjugated diolefin monomers and members selected from the group consisting of vinylnaphthalene, styrene and ring substituted alkyl styrenes is conducted at a temperature within the range of 20° C to 100° C. It is generally preferably for such monomeric mixtures to be polymerized at a temperature within the range of 40° C to 70° C with it being most preferred for a temperature within the range of 50° C to 65° C to be utilized. The amount of monomeric constituents utilized will depend upon the desired characteristics of the diblock polymer or triblock polymer being prepared. For instance, polymers which are being prepared for use as thermoplastic elastomers for utilization in preparing molded articles will preferably contain from about 60% to about 70% conjugated diolefin monomers based upon the total amount of weight of monomers in the polymer. Similarly, in diblock polymers and triblock polymers which are being prepared for use in adhesive applications, it is normally preferred for 80% to 85% conjugated diolefin monomers to be utilized, based upon the total amount by weight of monomers in the polymer produced.

The triblock polymers of the present invention are synthesized utilizing a three step process. The first step in this process involves preparing either a lithium-terminated polyisopropenylnaphthalene block or a lithium-terminated vinylnaphthalene block utilizing an organolithium catalyst as is done in the first step in the preparation of the diblock polymers of this invention. The second step comprises allowing the lithium-terminated block to react with one or more conjugated diolefin monomers at a temperature within the range of 20° C to 100° C. This results in the formation of a lithium-terminated diblock polymer. The lithium-terminated diblock polymer is then allowed to react with vinylnaphthalene, styrene, and/or ring substituted alkyl styrenes. This polymerization reaction is carried out at a temperature within the range of 20° C to 100° C. This results in the formation of a triblock polymer. Such triblock polymers are comprised of (1) an end block which is comprised of polyisopropenylnaphthalene or polyvinylnaphthalene; (2) a middle block which is comprised of a polymer of at least conjugated diolefin; and (3) a second end block which is comprised of a polymer of at least one member selected from the group consisting of vinylnaphthalene, styrene, and ring substituted alkyl styrenes. It is preferred to prepare the middle block and the second end block utilizing a polymerization temperature within the range of 40° C to 70° C with a temperature within the range of 50° C to 65° C being more preferred.

The amount of monomers utilized in preparing the middle block and the second end block is selected so as to produce blocks having the desired molecular weights. For instance, the molecular weight of the middle block which is comprised of a polymer of at least one conjugated diolefin will generally range from about 5,000 to about 100,000. It is generally preferred for such blocks which are comprised of repeat units which are derived from conjugated diolefin monomers to have a number average molecular weight within the range of 10,000 to 70,000. It is more preferred for such middle blocks to have a number average molecular weight within the range of 25,000 to 60,000.

A sufficient amount of vinylnaphthalene, styrene and/or ring substituted alkyl styrenes will be utilized in the preparation of the second end block so as to produce a result in the formation of a polymeric segment having a molecular weight of at least about 7,000. In most cases the molecular weight of the second end block which is comprised of repeat units which are derived from vinylnaphthalene, styrene, and ring substituted alkyl styrenes will normally have a number average molecular weight within the range of 7,000 to about 30,000. In most cases it is preferred for the second end block to have a number average molecular weight within the range of 10,000

to 25,000 with number average molecular weights within the range of 12,000 to 20,000 being most preferred.

This invention is illustrated by the following examples which are merely for the purpose of illustration and are not to be regarded as limiting the scope of the present invention or the manner in which it can be practiced. Unless specifically indicated otherwise, all parts and percentages are given by weight.

Example 1

A solution of 42.2 grams of isopropenylnaphthalene (IPN) in sufficient toluene to make 100 mls total solution (2.5 M) was prepared and passed through a silica gel column to remove water and polar impurities. Twenty mls of this solution were placed in a 1-oz (30 ml) bottle and 0.62 ml of 0.80 M tetrahydrofuran in hexane was syringed into the bottle. Then 0.80 M sec-butyllithium in hexane was added dropwise until permanent green color formed in the IPN solution. Then 0.62 ml of 0.80 M sec-butyllithium was added and the bottle was capped and stored at about 5°C to allow the IPN to polymerize for six days.

A solution was prepared from 770 mls of toluene and 260 mls of butadiene, passed through a silica gel column, and 80 mls were placed in a 4-oz (118 ml) bottle. A solution of 30 mls of styrene and 70 mls of cyclohexane was prepared, passed through a silica gel column, and collected in several 1-oz (30 ml) bottles.

To the 80 mls of butadiene-toluene solution was added 0.52 ml of 0.20 M sec-butyllithium, to react with impurities in the solution. Then 16.3 mls of the styrene solution and 9.8 mls of the "living" poly (IPN) solution were added. The bottle was capped and placed in a water bath at 50°C to tumble. All above operations were done under nitrogen atmosphere. After reacting for about 18, hours, a dark brownish-red viscous cement was obtained. Polymerization was terminated by injection 0.10 ml of methanol into the cement, which was then added to an isopropanol-methanol mixture containing a phenolic antioxidant. Polymer precipitated and was washed with fresh methanol-antioxidant solution, and dried in vacuo at 50°C to constant weight. The yield was 16.6 grams.

Each of the above monomer solutions was homopolymerized with sec-butyllithium to obtain yields of the polymers which made up the blocks in the triblock copolymer. Using these yields and the amount of active lithium that was present in the "living" poly (IPN) solution, the molecular weight of the blocks were calculated. The triblock copolymer should consist of 3.0 grams of IPN with 13,000 number average molecular weight, 9.,6 grams of butadiene with 43,000 number average molecular weight, and 4.1 grams of styrene with 19,000 number average molecular weight. The calculated yield of 16.7 grams agrees well with the experimental yield of 16.6 grams.

The butadiene block will be a tapered copolymer of butadiene and styrene, since the styrene monomer was present when the butadiene was initiated by the "living" poly (IPN). The actual molecular weights of the tapered butadiene-styrene block and the final styrene block will be different from the above values, since these were calculated as "pure" blocks.

The triblock copolymer had an inherent viscosity of 0.70 dl/gm in toluene at 30°C. A solution of it was prepared in methylene chloride and a film was cast from this solution.

Dumbbells were cut from this film, which were approximately 0.015 inches (0.38 mm) thick and were 0.10 inches (0.25 mm) wide in the constricted section. Stress-stain properties of these dumbbells were measured with an Instron tester at 5 in/min (12.7 cm/min) crosshead separation speed. Tensile strength was 2400 pounds/inch$^2$ (1.65 $10^7$ Pascals). The polymer was compression molded for 5 minutes at 425°F (218°C) to form a test piece from which dumbbells with when tested as above, the tensile strength was 2010 pounds/inch$^2$ (1.39 x $10^7$ Pascals) with 910% ultimate elongation.

Dynamic mechanical properties of the cast film were measured at a frequency of 11 Hz over a temperature range of -100 to +180°C using a Rheovibron. Maxima in the tan δ occurred at -50°C, which is associated with the Tg of the elastomer center block, and at +147°C which is associated with the glass transition temperature (Tg) of the glassy end blocks. Similar data on polystyrene-poly-butadiene-polystyrene block copolymer gave respective Tg's of -92°C and +98°C.

This example clearly shows that diblock polymers having excellent properties can be prepared utilizing the polymerization technique of the present invention.

Examples 2-5

In this series of experiments, four different triblock polymers were prepared. A 2.51 molar solution of 2-isopropenylnaphthalene in toluene was initially prepared. Living poly 2-isopropenylnaphthalene of various desired molecular weights was then synthesized by adding the requisite amount of a 2.0 molar solution of diethyl ether in hexane and a 1.0 M solution of secondary-butyllithium in cyclohexane. The solution was added dropwise until a permanent dark green color formed. This typically required about 0.08 ml of the secondary-butyllithium solution for 35 ml of the 2-isopropenylnaphthalene solution. After the required amount of secondary-butyllithium solution had been added, the solution produced had a reddish-black color. The bottle containing the solution was capped and stored at about 0°C for at least 72 hours to ensure that the 2-isopropenylnaphthalene polymerization reach equilibrium.

A solution of 1,3-butadiene in toluene was prepared, passed through a silica gel column, and stored in a stainless steel cask under nitrogen; it had 18.2% butadiene by weight. Portions of 70 mls each were charged to 4-oz bottles under a nitrogen blanket. The scavenger level of this solution was determined as usual, adding 0.10 ml of a 1.0 M solution of tetramethylethylenediamine in cyclohexane to accelerate initiation by the sec-butyllithium.

Block copolymers were prepared using 70 mls of the butadiene-toluene premix, in a 4-oz (118 ml) bottle. To each bottle was added 0.11 ml of styrene; this is one percent by weight of the amount of butadiene present. Some styrene remained after all of the butadiene polymerized. When it is added to the living polybutadiene chains, the orange color of the styryl anion appeared. This serves as an "indicator" that the butadiene polymerization is complete. After the styrene was added, the scavenger level of sec-butyllithium was introduced and allowed to react for 15 seconds. The requisite amount of "living" poly(2-IPN) was syringed into the bottle, and it was capped and placed into a 50°C water bath to tumble. When the solution of living poly(2-IPN) was added to the butadiene-toluene premix, the mixture had the olive green color that is typical of the 2-IPN anion. The color rapidly changed to light tan as the butadiene began to polymerize. Initially, all solutions were clear; in less than one hour all had become opaque, indicating a phase separation had occurred in the solutions.

Styrene was passed through a silica-gel column which had been pre-wetted with hexane and blown dry with nitrogen. It was stored over calcium hydride under nitrogen. Immediately prior to its addition to the living 2-IPN-butadiene block copolymer, 0.20 M sec-butyllithium was added dropwise to the styrene until permanent faint yellow color of the styryl anion appeared, which indicates that all impurities have been scavenged from the styrene.

After three hours' reaction time for the butadiene polymerization, the requisite amount of scavenged styrene was syringed into each bottle, an they were returned to the 50°C bath. The orange color of the styryl anion began to appear at once in some solutions. Bottles were left in the bath to react for about 16 hours (overnight). At all times, the caps on the polymerization bottles were covered with rubber sleeve stoppers to protect them against possible water leakage.

After the styrene had polymerized the viscous cements of the living triblock copolymer had medium to dark olive green color. Evidently after all of the styrene reacts, a small amount of unreacted 2-IPN that remains in the mixture (the equilibrium monomer concentration) adds to the ends of the living polymer chains, forming the green 2-IPN anion. Polymerizations were terminated by syringing a few drops of deaerated methanol into the cement. Cements were coagulated in methanol containing a small amount of butylated hydroxytoluene (2,6-di-tert-butyl-p-cresol). Polymer was washed with fresh methanol-butylated hydroxytoluene solution, and dried in vacuo with mild heat (at less than 70°C).

Films of the polymers were prepared by dissolving 2 to 3 grams of the polymers in 20 mls of the desired solvent, and casting the solution. Dumbbells with a 0.10 inch (0.25 mm) width at the constricted portion were stamped from the films, and subjected to stress-strain tests using an Instron instrument with 5 in/min (12.7 cm/min) jaw separation speed. All tensile strengths reported herein are the best single result of two stress-strain tests.

The compositions and inherent viscosities of the triblock polymers produced in this series of experiments are shown in Table I. Molecular weights were calculated using known relationships between molecular weight, the amounts of monomers utilized, and the number of moles of organolithium compound utilized to initiate the polymerization.

Table I

Composition of Block Copolymers

| | Block Mol. Wt. ($X10^{-3}$) | | | Weight Percent | | | |
|---|---|---|---|---|---|---|---|
| Example | PIPN | Bd | PS | PIPN | PBd | PS | D.S.V. |
| 2 | 20 | 50 | 10 | 25 | 62.5 | 12.5 | 0.70 |
| 3 | 20 | 30 | 10 | 33.3 | 50 | 16.7 | 0.53 |
| 4 | 30 | 60 | 10 | 30 | 60 | 10 | 0.82 |
| 5 | 30 | 40 | 10 | 37.5 | 50 | 12.5 | 0.63 |

PIPN = polyisopropenylnaphthalene

PBd = polybutadiene

PS = polystyrene

It has been well established with styrene-butadiene block copolymers that the minimum number average molecular weight of polystyrene necessary to produce phase separation from the polybutadiene block is about 7,000. Hence, molecular weights of the 2-IPN and styrene blocks were selected to be sufficiently large so that they should insure strong phase separation from the butadiene blocks.

The molecular weight of 2-IPN is considerably higher than that of styrene (168 vs 104). Hence, the molecular weights of the 2-IPN blocks were designed to be higher than those of the styrene blocks, so that the mole fraction of 2-IPN in the polymers would equal or exceed the mole fraction of styrene. Also, the greater the

content of 2-IPN in the plastic phases (or domains) of the block copolymer, the higher should be the Tg of these domains. This should improve the elevated temperature strength of these copolymers.

Two number average molecular weights were chosen for the "living" 2-IPN polymers that formed the first step of the block copolymerizations, 20,000 and 30,000. The polystyrene blocks in all copolymers had number average molecular weights of 10,000. Sundry combinations of these blocks with a variety of molecular weights of polybutadiene blocks produced copolymers with compositions ranging from 37.5 to 50 weight percent of total "hard" blocks. These composition limits were chosen because elastomeric triblock copolymers typically attain maximum tensile strength in this range of "hard" block content.

The stress-strain properties of the triblock copolymers are given in Table II. All had tensile strengths at 25° C in excess of 4000 psi (2.76 x $10^7$ Pascals), and most test pieces exhibited tensiles above 6000 psi (4.14 x $10^7$ Pascals). These are extremely high tensile strengths for triblock copolymers based on aryl and diene monomers; they commonly exhibit tensile strengths in the range of 3000-4500 psi (2.07 x $10^7$ -3.10 x $10^7$ Pascals). These stress-strain properties generally surpass those of comparable ABC block copolymers of α-methylstyrene, butadiene, and styrene. These results clearly demonstrate that very strong thermoplastic elastomers can be made from 2-isopropenylnaphthalene.

The polymers all retained some tensile strength at 100° C, with most of the values ranging from 500-900 psi (3.45 x $10^6$ - 6.21 x $10^6$ Pascals). Typical triblock copolymers based on polystyrene (as Shell's commercial Kraton series) have tensile strengths at 100° C of less than 100 psi (6.895 x $10^5$ Pascals). The poly (2-IPN) and the polystyrene end blocks of these copolymers must be compatible and form a co-domain with a Tg between the Tg's of these two homopolymers (221° C and 100° C, respectively). The dynamic mechanical properties (tangent δ) of Example 5 had a loss peak at about 170° C, which is apparently the Tg of this "hard" block co-domain.

Table II

| | Modulus (psi) (25°C) % Elongation | | | Tensile (psi) Elongation (%) | |
|---|---|---|---|---|---|
| Example | 100% | 300% | 500% | 25°C | 100°C |
| | Cast from Toluene | | | | |
| 2 | 570 | 1310 | 3220 | 6230/690 | 510/520 |
| 3 | 1280 | 2740 | 4920 | 6910/580 | 840/480 |
| 4 | 540 | 1620 | 3550 | 4280/560 | 740/550 |
| 5 | 1270 | 3450 | 5850 | 6210/520 | 880/370 |
| | Cast from Dichloromethane | | | | |
| 2 | 580 | 1360 | 3410 | 6170/670 | 470/410 |
| 3 | 1200 | 2840 | 5730 | 6280/540 | 550/260 |
| 4 | -- | -- | -- | -- | 580/410 |
| 5 | 1500 | 3480 | -- | 5620/460 | 920/320 |

The elastic properties of a triblock copolymer film can be markedly affected by the solvent from which it is cast. Some differences between tensile strengths and elongations of the triblock polymer films cast from toluene and dichloromethane can be noted in Table II. These solvents were chosen because they tended to produce optimum properties as the casting solvents for SbS polymers. However, the effect of casting solvent on polymer properties is related in part to the solubility parameters of the solvents and the blocks of the copolymer under investigation. Since poly(2-IPN) has a solubility parameter slightly higher than that of polystyrene (9.2 vs 9.0), it is possible that another solvent might be the "optimum" solvent for casting films of polyisopropenyl-polybutadiene-polystyrene triblock polymers.

To test this possibility, a brief study of the effect of casting solvent on polymer properties was made for the polymer made in Example 2 which had highest IPN content (37.5% IPN). It was cast from five solvents with solubility parameters ranging from 8.2 to 9.9. The stress-strain properties of these films are given in Table III. Tensile strengths at 25° C varied widely, and there was over 2000 psi (1.38 x $10^7$ Pascals) difference between the lowest tensile (from cyclohexane) and the highest (from chloroform). Ultimate elongation did not vary as widely. At 100° C, there was over a two-fold difference in tensile strength between the lowest value (from cyclohexane) and the highest (from carbon tetrachloride). However, ultimate elongations also had

considerable variance, making comparisons of the tensile strengths somewhat tenuous.

The moduli of these films (Table II) clearly reflect the effect of the casting solvent. Cyclohexane is a good solvent for the polybutadiene block but a poor solvent for the "hard" blocks. A film cast from it should have the polybutadiene as the continuous phase, with the "hard" blocks being rather tightly coiled and deposited as discrete particles in the continuous rubbery matrix. It should be soft and elastomeric with a low modulus. Solvents with the highest solubility parameters are good solvents for the "hard" or plastic blocks and poor for the polybutadiene. Films cast from these should have the plastic blocks as the continuous phase with the poorly soluble, tightly coiled chains of polybutadiene dispersed in it. These films should be rather rigid with high moduli. Samples cast from the solvents in Table III followed this pattern rather closely. Both their 100% and 300% moduli generally increased steadily as the solubility parameter of the solvent increased.

These results again demonstrate the effect of casting solvent on stress-strain properties of block copolymers. This has particular importance where polymers of a new, previously unstudied monomer are being investigated. Until a thorough study of these effects is made for copolymers of 2-IPN, care should be taken when comparing or "rating" such copolymers on the basis of stress-strain properties alone.

ABC-type triblock copolymers of 2-isopropenylnaphthalene, butadiene, and styrene, with total end-block content ranging from 37.5 to 50 weight percent behave as thermoplastic elastomers. The poly(2-IPN) and polystyrene end blocks apparently are compatible, and form a single hard-block domain with a Tg of about 170° C. These copolymers have outstanding tensile strengths of greater than 6000 psi ($4.14 \times 10^7$ Pascals) at 25° C, and tensile strengths of several hundred psi (about $2.07 \times 10^6$ Pascals) at 100° C. This is a considerable improvement over the stress-strain properties of conventional styrene-butadiene-styrene block copolymers. The ABC-type copolymer provides one method for utilizing the high Tg (about 210° C) of poly(2-IPN) to prepare thermoplastic elastomers with improved strength at elevated temperature.

While certain representative embodiments and details have been shown for the purpose of illustrating the present invention, it will be apparent to those skilled in this art that various changes and modifications can be made therein without departing from the scope of the present invention.

Table III

Effect of Casting Solvent on the Stress-Strain Properties of IPN-B-S Films

| Solvent | Solubility Parameter | Modulus (psi) (25°C) | | Tensile (psi)/Elongation (%) | |
|---|---|---|---|---|---|
| | | 100% | 300% | 25°C | 100°C |
| Cyclohexane | 8.2 | 1010 | 2630 | 4640/510 | 520/460 |
| Carbon Tetrachloride | 8.6 | 1350 | 2640 | 6240/530 | 1180/520 |
| Toluene | 8.9 | 1270 | 3450 | 6210/520 | 880/370 |
| Chloroform | 9.3 | 1520 | 3620 | 6840/520 | 900/370 |
| Tetrahydrofuran | 9.9 | 1590 | 3160 | 5340/470 | 890/430 |

## Claims

1. A thermoplastic elastomer having excellent high-temperature strength which is a triblock polymer which is characterized by containing (1) an end block which is comprised of a member selected from the group consisting of polyvinylnaphthalene and polyisopropenylnaphthalene; (2) a middle block which is comprised of a polymer of at least one conjugated diolefin; and (3) a second end block which is comprised of a polymer of at least one member selected from the group consisting of vinylnaphthalene, styrene, and ring substituted alkyl styrenes.

2. A process for synthesizing a triblock polymer having excellent high-temperature strength characterized by (1) polymerizing a member selected from the group consisting of isopropenylnaphthalene and vinylnaphthalene in the presence of an organolithium catalyst to produce a lithium terminated block with the proviso that a temperature within the range of -40°C to 40°C is utilized if isopropenylnaphthalane is being polymerized and with the proviso that a temperature within the range of 20°C to 100°C is utilized if vinylnaphthalane is being polymerized; (2) allowing the lithium terminated block to react with at least one conjugated diolefin monomer at a temperature within the range of 20°C to 100°C to produce a lithium terminated diblock polymer; and (3) allowing the lithium terminated diblock polymer to react with at least one member selected from the group consisting of vinylnaphthalene, styrene, and ring substituted alkyl styrenes at a temperature within the range of 20°C to 100°C to produce the triblock polymer.

3. A thermoplastic elastomer having excellent high-temperature strength which is a diblock polymer which is characterized by containing (1) an end block which is prepared by polymerizing at least one member selected from the group consisting of isopropenylnaphthalene and vinylnaphthalene, and (2) a tapered block which is prepared by polymerizing at least one conjugated diolefin and at least one member selected from the group consisting of vinylnaphthalene, styrene, and ring substituted alkyl styrenes.

4. A process for synthesizing a tapered block containing diblock polymer which is a thermoplastic elastomer having excellent high temperature strength characterized by (1) polymerizing a member selected from the group consisting of isopropenylnaphthalene and vinylnaphthalene in the presence of an organolithium catalyst to produce a lithium terminated block, with the proviso that if isopropenylnaphthalene is being polymerized that a polymerization temperature within the range of -40°C to 40°C is utilized and with the proviso that if vinylnaphthalene is being polymerized that a polymerization temperature within the range of 20°C to 100°C is utilized; and (2) allowing the lithium terminated block to react with at least one conjugated diolefin and at least one member selected from the group consisting of vinylnaphthalene, styrene, and ring substituted alkyl styrenes at a temperature within the range of 20°C to 100°C to produce said tapered block containing diblock polymer.

5. A process as specified in claim 1 or 4 characterized in that said organolithium catalyst is an organo monolithium compound.

6. A process as specified in Claim 1 or claim 8 when dependent upon claim 1 characterized in that said member selected from the group consisting of isopropenylnaphthalene and vinylnaphthalene is isopropenylnaphthalene, characterized in that said isopropenylnaphthalene is polymerized at a temperature within the range of -5°C to 30°C; characterized in that said lithium terminated block is allowed to react with said conjugated diolefin monomers at a temperature within the range of 40°C to 70°C; and characterized in that said lithium terminated diblock polymer is allowed to react with said members selected from the group consisting of vinylnaphthalene and styrene at a temperature within the range of 40°C to 70°C.

7. A thermoplastic elastomer as specified in claim 1 characterized in that said end block is comprised of polyisopropenylnaphthalene having a number average molecular weight within the range of 4,000 to 50,000; characterized in that said middle block is comprised of a polymer of at least one conjugated diolefin having a number average molecular weight within the range of 5,000 to 100,000; and characterized in that said second end block is comprised of a polymer of at least one member selected from the group consisting of vinylnaphthalene, styrene, and ring substituted alkyl styrenes having a number average molecular weight in the range of 7,000 to 30,000.

8. A thermoplastic elastomer as specified in claim 7 characterized in that said middle block is comprised of a member selected from the group consisting of polybutadiene and polyisoprene, and characterized in that said second end block is comprised of a member selected from the group consisting of polyvinylnaphthalene and polystyrene.

9. A process as specified in claim 6 characterized in that said isopropenylnaphthalene is polymerized at a temperature within the range of 0°C to 20°C; characterized in that said lithium terminated block is allowed to react with said conjugated diolefin monomers at a temperature within the range of 50°C to 65°C; characterized in that said lithium terminated diblock polymer is allowed to react with said members selected from the group consisting of vinylnaphthalene and styrene at a temperature within the range of 50°C to 65°C; and characterized in that said conjugated diolefin monomer is isoprene.

10. A thermoplastic elastomer as specified in claim 1 or 8 characterized in that said end block is

comprised of polyisopropenylnaphthalene having a number average molecular weight within the range of 8,000 to 30,000; characterized in that said middle block is comprised of polyisoprene having a number average molecular weight within the range of 10,000 to 70,000; and characterized in that said second end block is comprised of polystyrene having a number average molecular weight in the range of 10,000 to 25,000.